# EUROPEAN PATENT APPLICATION

(11) **EP 4 817 852 A1**
(43) Date of publication of application: **07.10.2026**
(21) Application number: 26169258.6
(22) Date of filing: 30.03.2026
(51) Int. Cl.: B29C 65/18, B29C 65/32, B29K 101/00, B29L 31/30

(54) **TEMPERATURE EQUALIZING SUSCEPTOR**

(30) Priority: 01.04.2025 US 202563781749 P
(71) Applicant: Rohr, Inc., Chula Vista, CA 91910-2098 (US)
(72) Inventor: VAN TOOREN, Michael, San Diego, CA, 92122 (US); CROSHAW, Chris, San Diego, CA, 92110 (US); OLIVARES, Rudy, Corona, CA, 92879 (US)
(74) Representative: Dehns

(57) **Abstract**

An apparatus and method for welding a thermoplastic composite component is provided. The apparatus includes a tool (56) and a power source. The tool (56) includes a heating device (58) energized by the power source and a susceptor (60) spaced from the heating device (58). The susceptor (60) is configured for use in welding thermoplastic composite material and has a Curie temperature close to a susceptor temperature specified to be used during welding. The susceptor (60) is disposed on the tool (56) and includes a susceptor length extending longitudinally along the tool (56). The heating device (58) is configured to induce an electromagnetic field within a susceptor length first portion and second portion. The heating device (58) is configured to heat the first portion to the susceptor temperature and heat the second portion to a second temperature different than the susceptor temperature. The heating device (58) longitudinally overlaps the first portion.

## Description

### BACKGROUND

### 1. Technical Field

This disclosure relates generally to welding composite components for an aircraft and, more particularly, to induction-conduction welding thermoplastic composite components for the aircraft.

### 2. Background Information

Various systems and methods are known in the art for joining composite structures. While these known systems and processes have various advantages, there is still room in the art for improvement. In particular, there is a need in the art for a welding system and method that provides homogenous temperature distribution along a weld line.

### SUMMARY OF THE DISCLOSURE

According to an aspect of the present disclosure, an apparatus for welding a thermoplastic composite component is provided. The apparatus is configured with or otherwise includes a tool and a power source. The tool includes a heating device and a susceptor spaced from the heating device. The power source is configured to energize the heating device. The susceptor configured for use in welding thermoplastic composite material and is configured with or otherwise includes a Curie temperature that is close to a susceptor temperature specified to be used during the welding. The susceptor is disposed on an outer surface of the tool and includes a susceptor length extending longitudinally along the outer surface of the tool. The heating device is configured to induce an electromagnetic field within a first portion of the susceptor length and a second portion of the susceptor length. The heating device is configured to heat the first portion of the susceptor length to the susceptor temperature and heat the second portion of the susceptor length to a second temperature different than the susceptor temperature. The heating device longitudinally overlaps the first portion of the susceptor length.

In any of the aspects and/or embodiments described above and herein, the susceptor temperature may be a maximum susceptor temperature specified to be used during the welding.

In any of the aspects and/or embodiments described above and herein, the welding is configured as or otherwise includes induction-conduction welding.

In any of the aspects and/or embodiments described above and herein, the susceptor may be configured as or otherwise includes a temperature equalizing susceptor.

In any of the aspects and/or embodiments described above and herein, the susceptor may be configured with or otherwise includes nickel alloy.

In any of the aspects and/or embodiments described above and herein, the susceptor may be configured with or otherwise includes an alloy including nickel and iron.

In any of the aspects and/or embodiments described above and herein, the alloy may include cobalt.

In any of the aspects and/or embodiments described above and herein, the Curie temperature may be equal to or within a predetermined range of the susceptor temperature.

In any of the aspects and/or embodiments described above and herein, the second portion of the susceptor length may be arranged longitudinally adjacent to the first portion of the susceptor length, and the second temperature may be less than the susceptor temperature.

In any of the aspects and/or embodiments described above and herein, the heating device may be further configured to induce the electromagnetic field within a third portion of the susceptor length and heat the third portion of the susceptor length to a third temperature less than the susceptor temperature or the second temperature. The susceptor length may include the first portion, the second portion and the third portion.

In any of the aspects and/or embodiments described above and herein, the heating device may be configured as or otherwise include at least one induction coil.

According to an aspect of the present disclosure, a method of manufacture is provided. During the method, a first component and a second component are provided. The first component is arranged with the second component. A welding apparatus engages with the first component and the second component. The welding apparatus includes at least one induction coil and a susceptor vertically spaced form the at least one induction coil. The at least one induction coil is energized to induce an electromagnetic field and heat a first zone of the susceptor to a susceptor temperature specified to be used during welding the first component and the second component. The susceptor may be configured with or otherwise include a Curie temperature that is close to the susceptor temperature. The first zone may be configured as or otherwise include a portion of a length of the susceptor. The at least one induction coil longitudinally overlaps the first zone. The first component is welded to the second component along an interface using the heat from the first zone of the susceptor. The first zone longitudinally overlaps the interface.

In any of the aspects and/or embodiments described above and herein, the susceptor temperature may be a maximum susceptor temperature specified to be used during the welding.

In any of the aspects and/or embodiments described above and herein, the welding may be configured as or otherwise include induction-conduction welding.

In any of the aspects and/or embodiments described above and herein, the Curie temperature may be equal to or within a predetermined range of the susceptor temperature.

In any of the aspects and/or embodiments described above and herein, the energizing the at least one induction coil may further comprise heating a second zone of the susceptor to a second temperature less that the susceptor temperature. The second zone may be adjacent the first zone and may longitudinally overlap the interface. The length of the susceptor may be configured with or otherwise include at least the first zone and the second zone.

In any of the aspects and/or embodiments described above and herein, the energizing the at least one induction coil may further comprise heating a third zone of the susceptor to a third temperature less than the susceptor temperatures or the second temperature. The third zone may be adjacent the second zone. The length of the susceptor may comprise the first zone, the second zone, and the third zone.

In any of the aspects and/or embodiments described above and herein, the first component may be configured as or otherwise include an exterior skin thermoplastic composite component. The second component may be configured as or otherwise include a support member thermoplastic composite component..

In any of the aspects and/or embodiments described above and herein, the third zone may longitudinally overlap opposing longitudinal ends of the support member thermoplastic component.

According to another aspect of the present disclosure, a method of manufacture is provided. During the method, an exterior skin and a support member is provided, and the exterior skin is arranged with the support member. A welding apparatus engages with the exterior skin and the support member. The welding apparatus may be configured with or otherwise include a heating device and a susceptor vertically spaced from the heating device. The heating device is energized to induce an electromagnetic field and heat a plurality of zones of the susceptor. The plurality of zones may be configured with a first zone, a second zone and a third zone. The first zone is heated to a susceptor temperature specified to be used during welding the exterior skin and the support member. The susceptor comprises a Curie temperature is equal to or within a predetermined range of the susceptor temperature. The second zone is located between the first zone and the third zone, and is heated to a second temperatures less that the susceptor temperature. The first zone, the second zone and the third zone comprise a length of the susceptor. The exterior skin is welded to the support member along an interface using the heat from at least one of the first zone or the first zone and the second zone.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic cross-sectional illustration of a fiber-reinforced thermoplastic structure according to an embodiment of the present disclosure.
FIG. 2 is a partial sectional illustration of a structure component with a multi-layer configuration according to an embodiment of the present disclosure.
FIG. 3 is a schematic cross-sectional illustration of a welding apparatus according to an embodiment of the present disclosure.
FIGS. 4 illustrates a flowchart for a welding method according to an embodiment of the present disclosure.
FIG. 5 is a schematic cross-sectional illustration of a welding apparatus according to an embodiment of the present disclosure.
FIG. 6 illustrates a graphical relationship between susceptor temperatures along various lengths of the susceptor according to an embodiment of the present disclosure.

### DETAILED DESCRIPTION

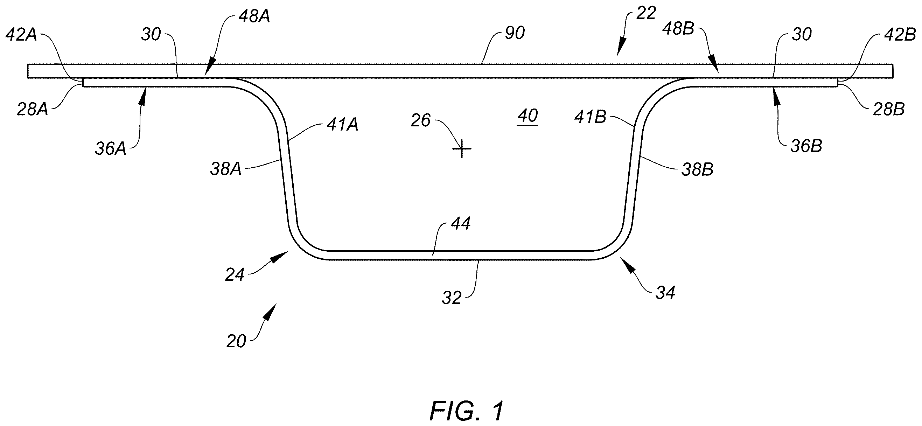

FIG. 1 illustrates a portion of a fiber-reinforced thermoplastic structure 20 for an aircraft. This structure 20 may be configured as part of a propulsion system for the aircraft. The structure 20, for example, may be configured as a component of a nacelle. Examples of the nacelle component include, but not limited to, a fan cowl, an outer barrel, an inner barrel, an inlet lip skin and a translating sleeve. The structure 20 may alternatively be configured as a component of a fuselage or a wing of the aircraft. The structure 20 may still alternatively be configured as a component arranged within the aircraft fuselage; e.g., a component within a cabin of the aircraft. The present disclosure, however, is not limited to the foregoing exemplary aircraft structures. Furthermore, it is contemplated the structure 20 of the present disclosure may also be configured for non-aircraft applications. However, for ease of description, the structure 20 may be referred to and/or described below as an aircraft structure such as the nacelle structure.

The aircraft structure 20 of FIG. 1 comprises a plurality of components including an exterior skin 22 and a support member 24; e.g., a structural support. The support member 24 may be configured as a stiffener, a pedestal, a structural core and/or any other member which stiffens, holds, locates and/or otherwise supports the aircraft structure 20 and/or the exterior skin 22. Examples of the stiffener include, but are not limited to, a rib, a stringer, a longeron, a beam and a truss. However, for ease of description, the support member 24 may be referred to and/or described below as a stiffener; e.g., a hat shaped stiffener.

The support member 24 of FIG. 1 extends longitudinally along a longitudinal centerline 26 of the support member 24. The support member 24 extends laterally between and to a first side 28A of the support member 24 and a second side 28B of the support member 24. The support member 24 extends vertically between and to an exterior side 30 of the support member 24 and an interior side 32 of the support member 24.

The support member 24 of FIG. 1 includes a channeled base 34 and one or more mounts 36A and 36B (generally referred to as "36"); e.g., flanges. The channeled base 34 extends longitudinally along the longitudinal centerline 26. The channeled base 34 extends laterally between and to a first side 38A of the channeled base 34 and a second side 38B of the channeled base 34. The channeled base 34 extends vertically between and to (or about) the support interior side 32 and the support exterior side 30. The channeled base 34 includes a channel 40 that extends longitudinally in (e.g., through) the support member 24 and the channeled base 34. The channel 40 extends laterally in (e.g., within) the support member 24 and its channeled base 34 between opposing sidewalls 41A and 41B (generally referred to as "41") of the channeled base 34.

Each of the mounts 36 is connected to (e.g., formed integral with) the channeled base 34. Each of the mounts 36 is disposed at (e.g., on, adjacent or proximate) the support exterior side 30. Each of the mounts 36A, 36B projects laterally out from a respective one of the base sidewalls 41A, 41B to a distal end 42A, 42B of that mount 36. These mounts 36A, 36B project laterally out from the channeled base 34 and the base sidewalls 41A, 41B in opposite directions and away the channel 40; however, the present disclosure is not limited to such an exemplary mount arrangement. Each of the mounts 36 is welded to the exterior skin 22 at / along a respective interface 48A, 48B (generally referred to as "48") between the mount 36A, 36B of the support member 24 and the exterior skin 22.

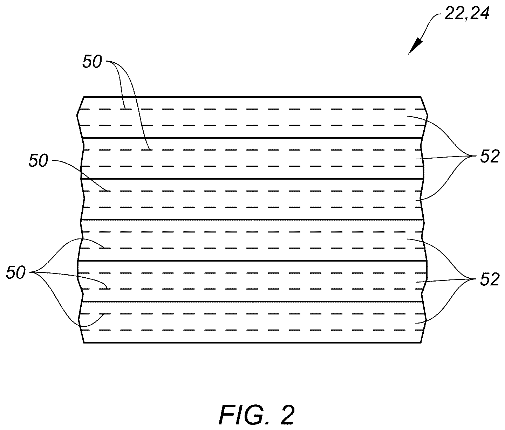

Referring to FIG. 2, the aircraft structure components 22 and 24 may be constructed from one or more layers of component material, where the component materials of the aircraft structure components 22 and 24 may be common component materials (e.g., the same component materials) or unique component materials (e.g., different component materials). Each component material may be a fiber-reinforced thermoplastic composite. Fiber-reinforcement 50, for example, may be embedded within a thermoplastic material 52; e.g., a thermoplastic matrix. Examples of the fiber-reinforcement 50 include, but are not limited to, metal fibers (e.g., aluminum fibers, brass fibers, and stainless steel fibers), carbon fibers including graphite fibers (e.g., polyacrylonitrile (PAN)-based carbon fibers, rayon-based carbon fibers, lignin-based carbon fibers, and pitch-based carbon fibers), insulating fibers (e.g., glass fibers), organic fibers (e.g., aramid fibers, polyparaphenylene benzoxazole (PBO) fibers, polyphenylene sulfide fibers, polyester fibers, acrylic fibers, nylon fibers, and polyethylene fibers), and inorganic fibers (e.g., silicon carbide fibers and silicon nitride fibers). Some or all of these fibers may be continuous fibers. Some or all of the fibers may also or alternatively be chopped fibers. The present disclosure, however, is not limited to the foregoing exemplary fiber-reinforcement materials or fiber types.

Examples of the thermoplastic material 52 include, but are not limited to, a semicrystalline thermoplastic resin and an amorphous thermoplastic resin. Examples of the semicrystalline thermoplastic resin include, but are not limited to, polyester, polyolefin, polyoxymethylene (POM), polyamide (PA), polyarylene sulfide, polyketone (PK), polyetherketone (PEK), polyether ether ketone (PEEK), polyether ketone (PEKK), polyvinylidene fluoride (PVDF), polytetrafluoroethylene (PTFE), polyaryletherketone (PAEK), polyether nitrile (PEN), fluororesin, and liquid crystal polymer (LCP). Examples of the polyester include, but are not limited to, polyethylene terephthalate (PET), polybutylene terephthalate (PBT), and polytrimethylene terphthalate (PTT). An example of the fluororesin includes, but is not limited to, polytetrafluoroethylene. Examples of the amorphous thermoplastic resin include, but are not limited to, polystyrene, polycarbonate (PC), polyphenylene ether (PPE), polyimide (PI), polyamide imide (PAI), polyetherimide (PEI), polysulfone (PSU), polyether sulfone (PES), and polyarylate (PAR). The present disclosure, however, is not limited to the foregoing exemplary thermoplastic materials.

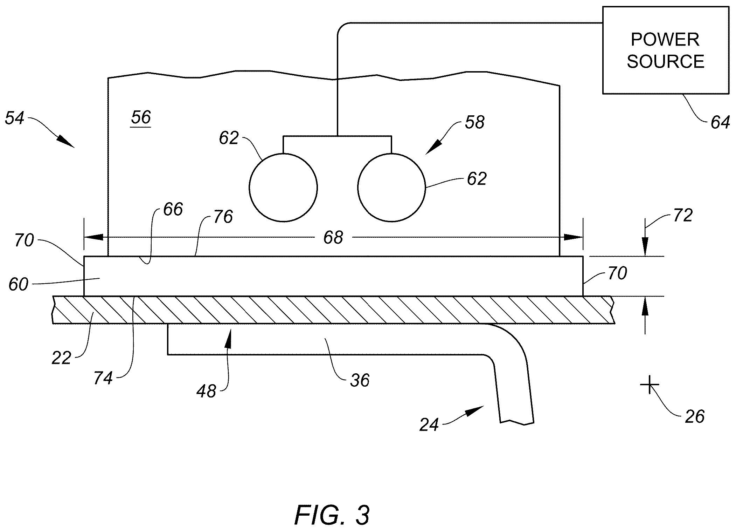

Referring to FIG. 3, the support structure 24 is welded to the exterior skin 22 using a welding apparatus 54. More particularly, the welding apparatus 54 of the present disclosure is configured to weld each of the mounts 36 to the exterior skin 22 at / along the respective interface 48 between the mount 36 of the support member 24 and the exterior skin 22.

The welding apparatus 54 comprises a tool 56 with a heating device 58 and a susceptor 60. The welding apparatus 54 is configured to engage with the exterior skin 22 and/or the support member 24 during welding. The welding apparatus 54, for example, may engage at / about the interface between the exterior skin 22 and the support member 24. The welding apparatus 54 may be further configured to translate during welding operations along the interface 48 in a direction substantially parallel to the longitudinal axis 26. It is contemplated, however, that the welding apparatus 54 may be configured as a fixed welding apparatus 54. In such a configuration, the support member 24 and the exterior skin 22 may instead be translated in the direction substantially parallel to the longitudinal axis to weld the mount 36 to the exterior skin 22 along the interface 48.

The tool 56 of FIG. 3 may be constructed from or otherwise include a material having a low thermal expansion, a low thermal conductivity, and low electromagnetic absorption (e.g., a ceramic material). The material construction of the tool 56 may thereby prevent the tool 56 from conducting thermal energy from the susceptor 60 during welding operations. The tool 56 may be configured with or otherwise include a contour corresponding to a surface geometry (e.g., curvature) of the interface 48 between the support member 24 and the exterior skin 22. It is contemplated, however, that the tool 56 may be configured with any size and/or shape necessary to weld the support structure 24 to the exterior skin 22.

The heating device 58 of the tool 56 is configured to generate an alternating electromagnetic field during welding. The heating device 58 is configured as or otherwise includes at least one induction coil 62. The induction coil(s) 62 of FIG. 3, for example, may comprise solenoid coils configured to induce an electromagnetic field in the susceptor 60. The induction coil 62 is arranged within the tool 56 at a position proximate to (e.g., adjacent with) the susceptor 60.

The induction coil(s) 62 may be electrically connected with a power source 64. The power source 64 is configured to generate a periodic electrical current in the induction coil(s) 62. The power source 64, for example, may be configured as a high-frequency current source. The power source 64 may be or otherwise include an alternating current (AC) generator, transformer, amplifier, etc. Alternatively, the power source 64 may include a direct current (DC) generator, transformer, amplifier, battery, etc. electrically coupled with an oscillator. The present disclosure, however, is not limited to such exemplary power sources.

Referring to FIG. 3, the susceptor 60 is coupled with a surface 66 of the tool 56. The susceptor 60 extends longitudinally within the tool 56 along the longitudinal axis 26. The susceptor 60 has a length 68 extending between lateral ends 70 of the susceptor 60. The susceptor 60 has a thickness 72 extending between an inner susceptor surface 74 and an outer susceptor surface 76. The inner susceptor surface 74 may be configured to engage (e.g., contact) the exterior skin 22 and/or the support member 24 during welding operations. The outer susceptor surface 76 is configured to couplably engage the tool surface 66. The susceptor 60 is arranged with the tool 56 such that the heating device 58 and the induction coil(s) 62 are positioned slightly elevated (e.g., spaced) from the susceptor 60.

The susceptor 60 is configured as a temperature equalizing susceptor with a Curie temperature close to a (e.g., maximum) susceptor temperature which is specified (e.g., required) for a welding process. As used herein, the Curie temperatures is "close to" the susceptor temperature when it is within a range of zero (0) degrees to thirty (30) degrees of the susceptor temperature which is specified for the welding process. The Curie temperature, for example, may be equal to the susceptor temperature and/or within a predetermined range (e.g., within fifteen (15) degrees) of the susceptor temperature. The susceptor 60 may thereby facilitate progressively reducing a heating rate when approaching the specified susceptor temperature.

The susceptor 60 may be constructed from or otherwise include a nickel alloy such as, but not limited to, a nickel-iron-cobalt (Ni/Fe/Co) alloy or a nickel-iron (Ni/Fe) alloy. Specific examples of suitable nickel alloys include, but are not limited to, Kovar alloy (produced by CRS Holdings, Inc. of Delaware, United States) and Invar alloy (produced by ArcelorMittal S.A. of Luxembourg City, Luxembourg). Of course, it is contemplated that other metals including other nickel alloys may be used for the susceptor, particularly where the selected metal has a Curie temperature as described above for example.

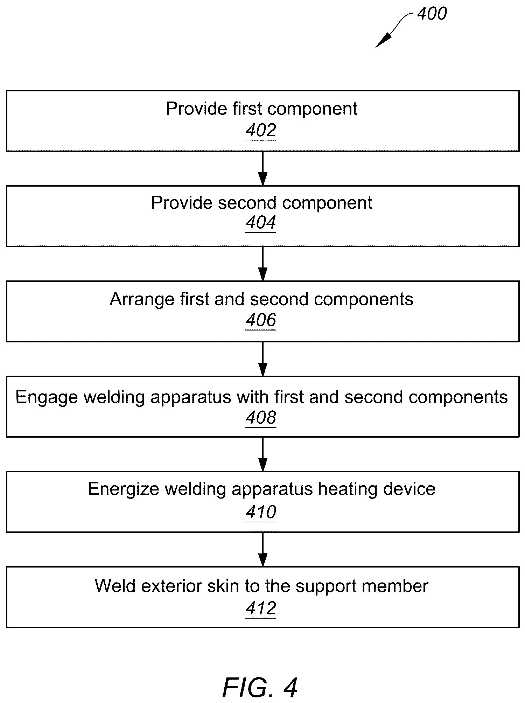

FIG. 4 is a flowchart of a method 400 for manufacturing a structure such as, but not limited to, the aircraft structure 20 described above. The method 400 may be performed during original manufacture and/or remanufacture of various component structures, including those included as part of an aircraft and, more particularly, as part of an aircraft propulsion system. For ease of description, the method 400 will be described with reference to manufacturing the aircraft structure 20 of FIG. 1.

In step 402, a first component of the aircraft structure 20 is provided. The exterior skin 22, for example, may be stamp formed, compression molded, injection molded, over-molded and laminated and/or otherwise manufactured as the first structure component.

In step 404, a second component of the aircraft structure 20 is provided. The support member 24, for example, may be stamp formed, compression molded, injection molded, over-molded and laminated and/or otherwise manufactured as the second structure component.

In step 406, the first component is arranged with the second component. The support member 24, for example, may be disposed with the exterior skin 22 for a test fit. More particularly, referring to FIGS. 1, the support member 24 is abutted against the exterior skin 22 such that the support member 24 contacts the exterior skin 22 along the interface(s) 48A, 48B. In such an arrangement, the exterior skin 22 may vertically overlap (e.g., lap) support member 24.

In step 408, referring to FIG. 3, the welding apparatus 54 engages the first component and/or the second component. The welding apparatus 54 of FIG. 3, for example, may be positioned using a gantry or other device to engage (e.g., contact) with the exterior skin 22 at the inner susceptor surface 74. In such a configuration, the exterior skin 22 is secured to (e.g., engaged with) the welding apparatus 54 via susceptor 60 and the support member 24 via flange 36. In some embodiments, however, the exterior skin 22 may be clamped to the support member 24 and the flange 36 using, for example, a clamping device (not shown) separate from the welding apparatus 54, and the inner susceptor surface 74 may be spaced from (e.g., not contacting) the exterior skin 22.

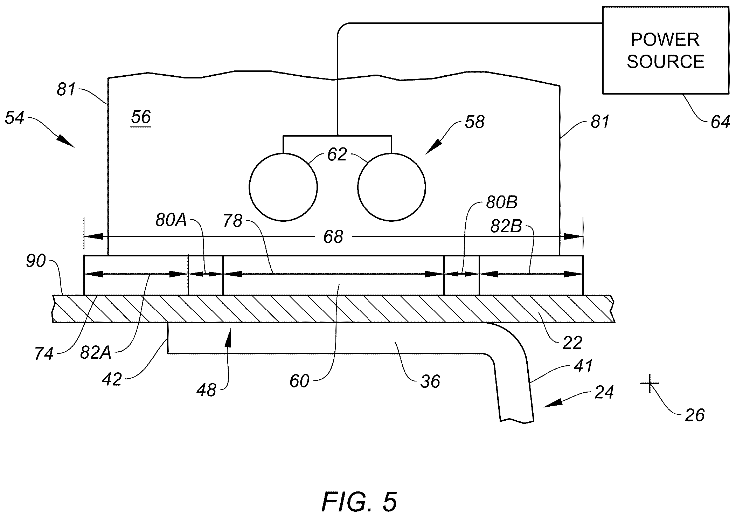

In step 410, the heating device 58 is energized. Referring to FIG. 5, the power source 64 may provide a high frequency (e.g., alternating) current to the inductor(s) heating device 58 and the induction coil(s) 62. The induction coil(s) 62 may subsequently generate electromagnetic fields capable of heating the susceptor 60 via eddy currents. In some embodiments, the susceptor 60 is configured to prevent penetration of electromagnetic fields generated by the induction coil(s) 62. In such a configuration, the susceptor 60 is configured to prevent eddy current heating of the exterior skin 22 and the support member 24.

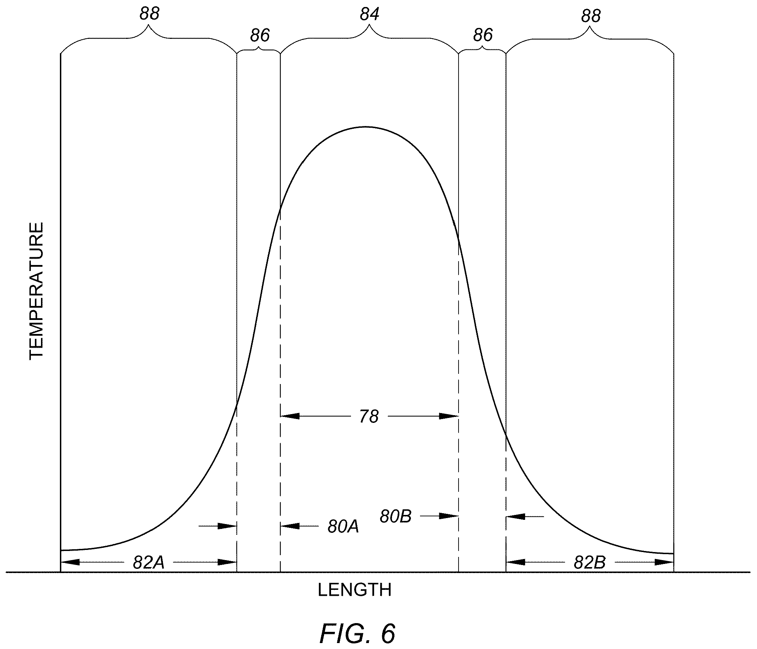

The welding apparatus 54 is configured for selective heating of the susceptor 60 by the heating device 58. Referring to FIGS. 5 and 6, eddy current heating of the susceptor 60 provides heated zones 78, 80A-B, 82A-B within discrete longitudinal portions along the length 68 of the susceptor 60. Each heated zone 78, 80A-B, 82A-B of the susceptor 60 is configured for eddy current heating of the susceptor 60 within a predetermined temperature range.

Each heated zone 78, 80A-B, 82A-B of FIGS. 5 and 6 receives eddy currents capable of heating the zone 78, 80A-B, 82A-B to the predetermined temperature range. A first zone 78 is positioned laterally (e.g., vertically) adjacent the heating device 58. The heating device 58 is configured to heat the first zone 78 to (e.g., within) a first temperature range 84 which includes the maximum susceptor temperature specified (e.g., required) for a welding process. The first temperature range 84 may be, for example, a temperature range of ± fifteen (15) degrees of the maximum susceptor temperature. Second zones 80A, 80B (generally referred to as "80") are arranged longitudinally adjacent to the first zone 78 and the heating device 58. The heating device 58 is configured to heat the second zones 80 to (e.g., within) a second temperature range 86. The second temperature range 86 is less than the first temperature range 84. The second temperature range 86, for example, is between fifty percent (50%) and ninety-five percent (95%) of the first temperature range 84. Third zones 82A, 82B (generally referred to as "82") are arranged longitudinally adjacent to the second zones 80 and extend longitudinally towards opposing ends 81 of the welding apparatus 54. The heating device 58 is configured to heat the third zones 82 to (e.g., within) a third temperature range 88. The third temperature range 88 is less than the first temperature range 84 and/or the second temperature range 86. More particularly, the third temperature range 88 is configured as a temperature well below melting temperatures of the exterior skin 22 and/or the support member 24. The third temperature range 88, for example, is less than fifty percent (50%) or more equal to or less than 75 percent of the first temperature range 84. In an exemplary embodiment, the first temperature range may include a temperature range between 385 degrees C and 415 degrees C, the second temperature range may include a temperature range between 200 degrees C and 380 degrees C and the third temperature range may include a temperature range of 200 degrees C or less. It is contemplated, however, that other temperatures ranges 84, 86, 88 may be selected depending on factors including, but not limited to, the material construction of the susceptor, the thermoplastic composite materials to be welded, etc.

In step 412, referring to FIGS. 5 and 6, the fist component and the second component are welded. More particular, the exterior skin 22 is welded to the support member 24 to provide the aircraft structure 20. The exterior skin 22 and/or the support member 24, for example, receives heat from the susceptor 60 capable to heat the exterior skin 22 and/or the support member 24 to a weld processing temperature. The term "weld processing temperature" as used herein describes a temperature at which the thermoplastic material 52 of the exterior skin 22 and/or the thermoplastic material 52 of the support member 24 melts and can form a weld between the exterior skin 22 and the support member 24. Upon approaching the welding processing temperature, a melt layer may thereby form along at least a portion of the interface 48 between the exterior skin 22 and the support member 24. This melt layer may bond the exterior skin 22 and the support member 24 together upon cooling thereof.

The welding apparatus 54 of FIG. 5 is positioned to longitudinally overlap the interface 48 during welding. The inner susceptor surface 74, for example, may longitudinally overlap and/or contact the exterior skin 22 at an outer skin surface 90. In such an arrangement, the first zone 78 and/or the second zones 80 may longitudinally overlap the exterior skin 22 and the support member 24 along the interface 48, with the third zones 82A, 82B longitudinally overlapping the distal end 42 and the base sidewall 41, respectively. Referring to FIG. 6, the third temperature range 88 corresponding to the susceptor third zones 82 is lower (e.g., significantly lower) than the first temperatures range 84 corresponding to the first zone 78. The welding apparatus 54 is thereby configured to heat the interface 48 between the exterior skin 22 and/or the support members 24 to the weld processing temperature while preventing heating of the exterior skin 22 along the region outside of the interface 48 which would damage, degrade, or otherwise compromise the aircraft component and/or the exterior skin 22 outside the welded portion of the interface 48.

The welding apparatus 54 and susceptor 60 of the present disclosure may reduce complexity and/or cost of welding equipment, reduce cost of recipe (e.g., process step) development for new part combinations and/or improve weld quality. This in turn may simplify a process for qualification and control.

The foregoing susceptors, welding systems and methods may be utilized during original manufacture and/or remanufacture of various aircraft components. The use of the susceptor according to embodiments of the present disclosure may facilitate progressively reducing a heating rate when approaching the specified susceptor temperature, for example, with a reduced or no need for tuning elements and/or a complex control logic. Temperature over discrete lengths of the susceptor may equalize with a precision that may not otherwise be readily obtainable when using a conventional susceptors, welding systems and methods.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An apparatus for welding a thermoplastic composite component, comprising:
a tool (56) including a heating device (58) and a susceptor (60) spaced from the heating device (58); and
a power source configured to energize the heating device (58);
the susceptor (60) configured for use in welding thermoplastic composite material, the susceptor (60) comprising a Curie temperature that is close to a susceptor temperature specified to be used during the welding, and the susceptor (60) disposed on an outer surface of the tool (56) and including a susceptor length extending longitudinally along the outer surface of the tool (56);
wherein the heating device (58) is configured to induce an electromagnetic field within a first portion of the susceptor length and a second portion of the susceptor length, the heating device (58) configured to heat the first portion of the susceptor length to the susceptor temperature and heat the second portion of the susceptor length to a second temperature different than the susceptor temperature, and the heating device (58) longitudinally overlaps the first portion of the susceptor length.

2. The apparatus of claim 1, wherein the susceptor temperature is a maximum susceptor temperature specified to be used during the welding.

3. The apparatus of claim 1 or 2, wherein the welding comprises induction-conduction welding.

4. The apparatus of any preceding claim, wherein the susceptor (60) comprises a temperature equalizing susceptor.

5. The apparatus of any preceding claim, wherein the susceptor (60) comprises a nickel alloy.

6. The apparatus of any preceding claim, wherein the susceptor (60) comprises an alloy including nickel and iron, and optionally wherein the alloy further includes cobalt.

7. The apparatus of any preceding claim, wherein the Curie temperature is equal to or within a predetermined range of the susceptor temperature.

8. The apparatus of any preceding claim, wherein
the second portion of the susceptor length is arranged longitudinally adjacent to the first portion of the susceptor length; and
the second temperature is less than the susceptor temperature.

9. The apparatus of any preceding claim, wherein
the heating device (58) is further configured to induce the electromagnetic field within a third portion of the susceptor length and heat the third portion of the susceptor length to a third temperature less than the susceptor temperature or the second temperature; and
wherein the susceptor length comprises the first portion, the second portion and the third portion.

10. The apparatus of any preceding claim, wherein the heating device (58) comprises at least one induction coil (62).

11. A method of manufacture, comprising:
providing a first component and a second component;
arranging the first component with the second component;
engaging a welding apparatus with the first component and the second component, the welding apparatus including at least one induction coil (62) and a susceptor (60) vertically spaced from the at least one induction coil (62);
energizing the at least one induction coil (62) to induce an electromagnetic field and heat a first zone of the susceptor (60) to a susceptor temperature specified to be used during welding the first component and the second component, the susceptor comprising a Curie temperature that is close to the susceptor temperature, the first zone comprising a portion of a length of the susceptor, and the at least one induction coil (62) longitudinally overlapping the first zone; and
welding the first component to the second component along an interface using the heat from the first zone of the susceptor (60), the first zone longitudinally overlapping the interface.

12. The method of claim 11, wherein the susceptor temperature is a maximum susceptor temperature specified to be used during the welding; and/or
wherein the welding comprises induction-conduction welding; and/or
wherein the Curie temperature is equal to or within a predetermined range of the susceptor temperature.

13. The method of claim 11 or 12, wherein the energizing the at least one induction coil (62) further comprises:
heating a second zone of the susceptor (60) to a second temperature less that the susceptor temperature, the second zone adjacent the first zone and longitudinally overlapping the interface;
the length of the susceptor (60) comprises at least the first zone and the second zone, and optionally wherein the energizing the at least one induction coil (62) further comprises:
heating a third zone of the susceptor (60) to a third temperature less than the susceptor temperatures or the second temperature, the third zone adjacent the second zone;
the length of the susceptor (60) comprises the first zone, the second zone, and the third zone, and optionally wherein
the first component comprises an exterior skin thermoplastic composite component;
the second component comprises a support member thermoplastic composite component; and
the third zone longitudinally overlaps opposing longitudinal ends of the support member thermoplastic component.

14. The method of claim 11, 12 or 13, wherein
the first component comprises an exterior skin thermoplastic composite component; and the second component comprises a support member thermoplastic composite component.

15. A method of manufacture, comprising:
providing an exterior skin and a support member;
arranging the exterior skin with the support member;
engaging a welding apparatus with the exterior skin and the support member, the welding apparatus including a heating device (58) and a susceptor (60) vertically spaced from the heating device (58);
energizing the heating device (58) to induce an electromagnetic field and heat a plurality of zones of the susceptor (60), the plurality of zones comprising a first zone, a second zone and a third zone, the first zone heated to a susceptor temperature specified to be used during welding the exterior skin and the support member, the susceptor comprising a Curie temperature is equal to or within a predetermined range of the susceptor temperature, the second zone located between the first zone and the third zone, the second zone heated to a second temperatures less that the susceptor temperature, and the first zone, the second zone and the third zone comprising a length of the susceptor (60); and
welding the exterior skin to the support member along an interface using the heat from at least one of the first zone or the first zone and the second zone.
